# EUROPÄISCHE PATENTSCHRIFT

(11) **EP 1 104 950 B1**
(45) Veröffentlichungstag und Bekanntmachung des Hinweises auf die Patenterteilung: **08.12.2004**
(21) Anmeldenummer: 00121919.5
(22) Anmeldetag: 07.10.2000
(51) Int. Cl.: H02P 6/08, H02P 6/00, H02K 29/12, H02K 29/03

(54) **Elektronisch kommutierter Gleichstrommotor**
Electronically commutated D.C. motor
Moteur à courant continu commuté électroniquement

(30) Priorität: 27.11.1999 DE 29920905 U
(43) Veröffentlichungstag der Anmeldung: 06.06.2001
(73) Patentinhaber: ebm-papst St. Georgen GmbH & Co. KG, 78112 St. Georgen (DE)
(72) Erfinder: Lukenich, Stefan, 78224 Singen (DE); Schmider, Fritz, Ing. (grad.), 78132 Hornberg (DE)

(56) Entgegenhaltungen:
- EP-A- 0 574 823
- EP-A- 0 688 091
- DE-A- 3 932 802
- US-A- 3 242 406

## Beschreibung

Die Erfindung betrifft einen elektronisch kommutierten Gleichstrommotor (ECM). Derartige Motoren werden u.a. zum Antrieb von Lüftern verwendet, vgl. das DE-U1-295 01 695.7. Bei derartigen Motoren ist häufig der eigentliche Motor von seinen elektronischen Komponenten räumlich getrennt. Trotzdem soll ein solcher Motor sicher anlaufen und vor allem ruhig, also geräuscharm, laufen.

Das Dokument EP-A-0 688 091 beschreibt einen elektronisch kommutierten Gleichstrommotor, welcher zum Anschluß an eine Gleichspannungsversorgung ausgebildet ist, und welcher aufweist:
- einen permanentmagnetischen Rotor;
- einen Stator, welcher mindestens eine Antriebswicklung aufweist, die zwei Anschlüsse hat;
- eine H-Brückenschaltung, in deren Diagonalen die Antriebswicklung angeordnet ist und vier Transistoren als Schaltelemente aufweist,
wobei eine Kommutierungsschaltung zum alternierenden Aus- und Einschatten dieser Transistoren vorgesehen ist.

Es ist eine Aufgabe der Erfindung, einen neuen elektronisch kommutierten Gleichstrommotor bereitzustellen.

Eine Lösung dieser Aufgabe ist Gegenstand des Anspruchs 1. Man erhält so einen ECM, der sich besonders für den Antrieb von Lüftern eignet und der in Kombination mit Radiallüftern besonders vorteilhafte Eigenschaften hat.

Eine besonders vorteilhafte Ausgestaltung der Erfindung ist Gegenstand des Anspruchs 15. Eine solche Kombination eines Radiallüfters mit einem elektronisch kommutierten Motor, der mit einem Konstantstrom angetrieben wird, hat große Vorteile, weil eine solche Kombination eine wesentlich "steifere" Lüfterkennlinie hat, d.h. wenn der Strömungswiderstand im Luftstrompfad eines solchen Lüfters zunimmt (z.B. durch ein teilweise verstopftes Luftfilter), steigt automatisch die Lüfterdrehzahl an, um sozusagen diesen Widerstand zu überwinden. Für manche Anwendungen ergibt sich so eine wertvolle Sicherheitsreserve, z.B. dort, wo ein Filterwechsel nur in größeren Abständen möglich ist.

Weitere Einzelheiten und vorteilhafte Weiterbildungen der Erfindung ergeben sich aus dem im folgenden beschriebenen und in der Zeichnung dargestellten Ausführungsbeispiel, sowie aus den Unteransprüchen. Es zeigt:
- Fig. 1: die Unteransicht eines Radiallüfters, der von einem elektronisch kommutierten Motor angetrieben wird,
- Fig. 2: einen Schnitt längs der Linie II-II der Fig. 1,
- Fig. 3: eine erfindungsgemäße Schaltung, welche zum Betrieb des Lüfters nach den Fig. 1 und 2 geeignet ist,
- Fig. 4: Darstellungen der Spannungen, die bei Fig. 3 zwischen dem Punkt 3A und der Minusleitung 64 bzw. dem Punkt 3B und der Minusleitung 64 im Betrieb auftreten,
- Fig. 5: eine Darstellung der Spannung, welche im Betrieb an der Antriebsspule 25 der Fig. 3 auftritt, also zwischen den Punkten 3A und 3B,
- Fig. 6: eine Darstellung des Gesamtstroms I,
- Fig. 7: eine Darstellung der Spannung an einem Ausgang S der Schaltung der Fig. 3 bei rotierendem Motor, und
- Fig. 8: eine Darstellung der Spannung am Ausgang S der Fig. 3 bei blockiertem Rotor 19.

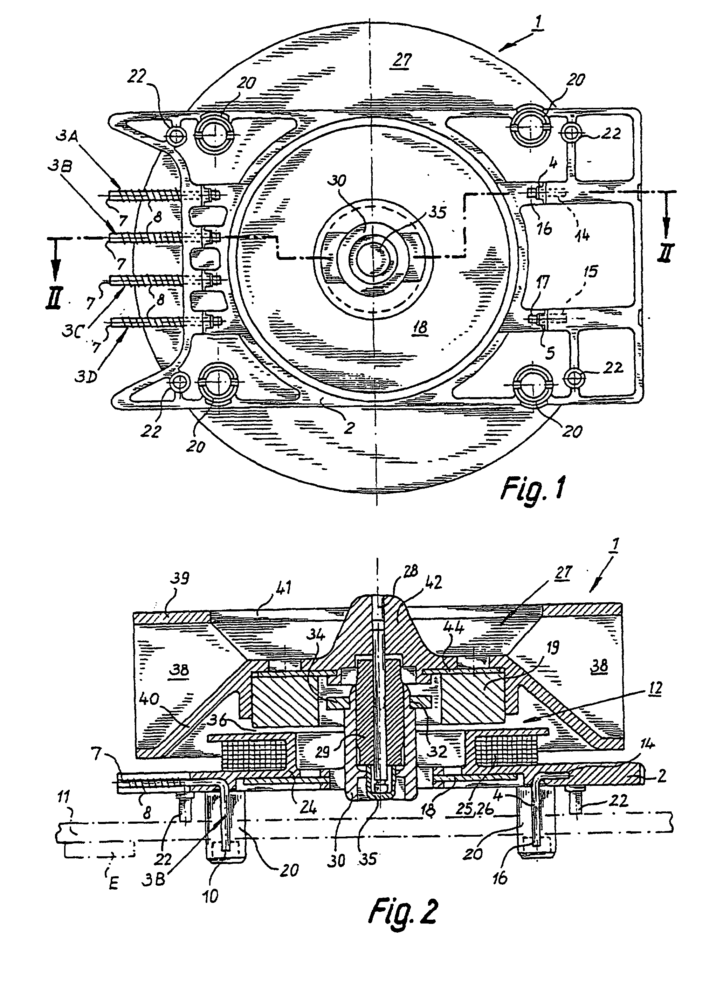

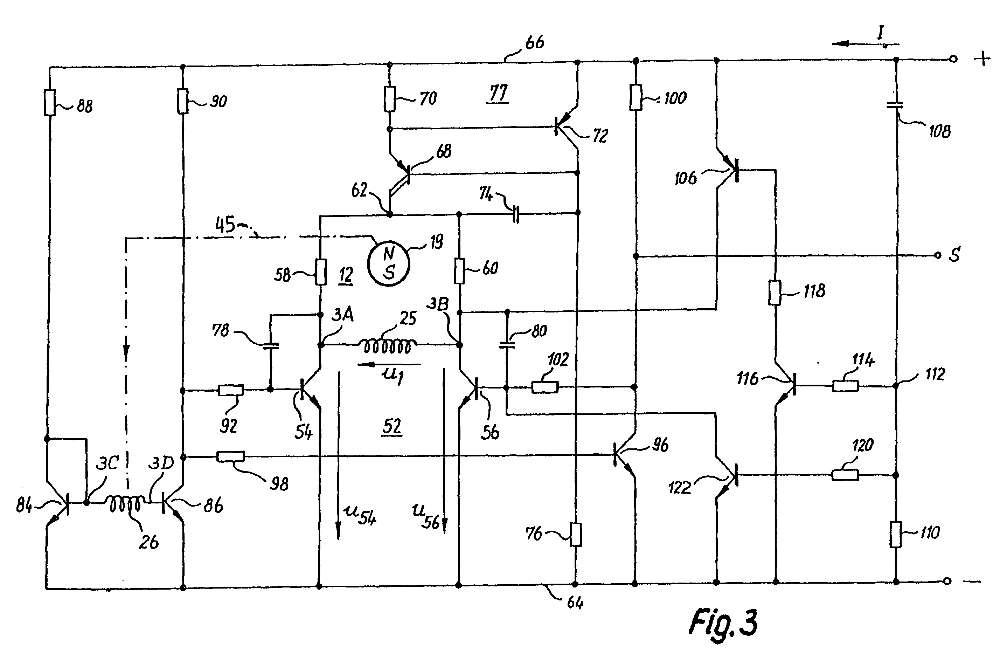

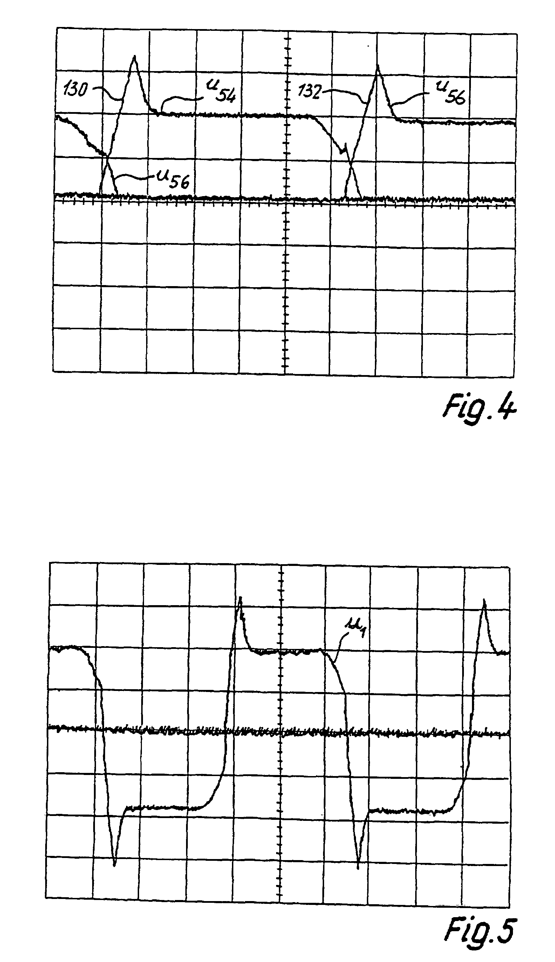

Die **Fig. 1 und 2** zeigen als bevorzugtes Beispiel einen Radiallüfter 1, wie er aus der DE-U1-295 01 695.7 bekannt ist. In Fig. 1 ist dieser Lüfter 1 in seiner Ansicht von unten dargestellt. Diese zeigt einen Träger 2, der als Kunststoff-Formstück ausgebildet ist. Elektrische Anschlüsse 3A, 3B, 3C, 3D, beispielsweise als Anschlussstifte ausgebildet, und Führungsstifte 4, 5 sind im Formstück 2 angeordnet und dort vorzugsweise durch Spritzen befestigt. Diese eingespritzten oder eingelegten Anschlussstifte 3A, 3B, 3C, 3D bestehen aus elektrisch leitfähigem Material. Das eine Ende 7 der Stifte 3A, 3B, 3C, 3D ist jeweils leitend mit einem Ende von Wicklungsanschlüssen 8 verbunden, und das andere Ende 10 der Stifte 3A, 3B, 3C, 3D ragt aus dem Träger 2 in der dargestellten Weise heraus. Diese Enden 10 werden in dafür vorgesehene Öffnungen oder Vertiefungen einer Leiterplatte 11 (in Fig. 2 strichpunktiert eingezeichnet) gesteckt und dort verlötet, d.h. kontaktierend mit der Antriebselektronik E für den Motor 12 des Lüfters 1 in Verbindung gebracht. Eine bevorzugte Ausführungsform für eine solche Elektronik E wird anhand der Fig. 3 und 4 ausführlich beschrieben. In Fig. 2 ist die Elektronik E symbolisch angedeutet. Diese kann sich an einer beliebigen Stelle der Leiterplatte 11 befinden.

In seiner bevorzugten Form hat der Motor 12 eine Antriebswicklung 25 und eine Sensorwicklung 26, deren Anschlüsse 8 über die Anschlussstifte 3A, 3B, 3C, 3D mit entsprechenden Anschlüssen auf der Leiterplatte 11 verbunden sind und von dort entsprechend der gewünschten Drehzahl und Drehrichtung mit Strom versorgt werden. Die Anschlüsse der Antriebswicklung 25 sind mit 3A und 3B bezeichnet, die Anschlüsse der Sensorwicklung 26 mit 3C und 3D.

Die Anschlussstifte 3A, 3B, 3C, 3D sind rechtwinklig ausgebildet, wobei das eine Ende 7 in der Ebene des im wesentlichen ebenen Trägers 2 angeordnet ist und das Ende 10 unten aus dem Träger 2 herausragt. Ebenso sind die Führungsstifte 4, 5 als rechtwinklige Stifte aus einem elektrisch leitfähigen Material ausgebildet, deren eine Enden 14 bzw. 15 in der Ebene des Trägers 2 liegen und deren andere Enden 16 bzw. 17 im wesentlichen in gleicher Länge und parallel zu den anderen Enden 10 der Anschlussstifte 3A, 3B, 3C, 3D aus dem Träger 2 herausragen.

Ein magnetisches Rückschlusselement 18 für einen Rotormagneten 19, hier eine ferromagnetische Blechscheibe in Form eines Kreisrings, ist im Formstück 2 eingespritzt. Befestigungsmittel 20, beispielsweise als geschlitzte Schnappbolzen ausgeführt, sind an der Unterseite des Formstücks 2 angespritzt. Die Befestigungsmittel dienen als Montagehilfe bzw. zur Befestigung des Lüfters 1 an der Leiterplatte 11. An der Unterseite des Formstücks 2 sind Abstandsbolzen 22 angespritzt. Diese dienen zur Einhaltung eines Abstands zwischen der Unterseite des Formstücks 2 und der Leiterplatte 11 und können auch als Pass- oder Führungsbolzen genutzt werden.

Die beschriebene Ausgestaltung des Stators, insbesondere des Statorträgers 2, ermöglicht eine weitgehend automatisierte Fertigung, d.h. das Wickeln und Anlegen der Wicklungsenden 8 an die Stifte 3A, 3B, 3C, 3D, ebenso das Anlöten und Prüfen, können auf einer automatischen Vorrichtung erfolgen.

Fig. 2 zeigt im Schnitt längs der Linie II-II der Fig. 1 Einzelheiten der Fig. 1. Auf einem Spulenkörper 24 (Teil des Trägers 2) ist die Statorwicklung aufgebracht, welche die Antriebswicklung 25 und die Sensorwicklung 26 aufweist.

Ein Lüfterrad 27 enthält eine Welle 28, die als Rotorwelle dient. Sie ist in einer Lageranordnung 29 (Sinterdoppellager) radial gelagert, welche in einem Lagertragrohr 30 befestigt ist, das Teil des gespritzten Formstücks 2 ist. Ein oberer, in axialer Richtung verlängerter und im Außendurchmesser verkleinerter Rand 32 des Lagertragrohrs 30 dient in Verbindung mit einem im Außendurchmesser verkleinerten Bereich des Sinterlagers 29 zur axialen Sicherung des Lagers. Das Sinterlager 29 kann alternativ auch durch Kleben, Verstemmen oder dergleichen befestigt werden. Im Bereich des oberen Randes 32 ist eine magnetische Hilfsanordnung 34 (ferromagnetische oder permanentmagnetische Anordnung) befestigt, welche vor allem die Funktion hat, den Rotor 19 beim Start in eine gewünschte Startstellung zu bringen. Diese Hilfsanordnung 34 kann zur Kostensenkung als Scheibe ausgeführt sein, welche aus gummimagnetischem Material gestanzt ist.

Eine in das Lagertragrohr 30 eingelegte Lagerschale 35 bildet die axiale Lagerung für das untere Ende der Welle 28. Die Anordnung der Lagerschale 35 bestimmt die Größe des im wesentlichen ebenen Luftspalts 36 zwischen dem Rotormagneten 19 und der Statorwicklung 25, 26. Zum Aufbau der Statorwicklung wird auf das DE-GM 8 702 271 verwiesen; z.B. können die Wicklungen 25, 26 aus zwei parallelen Drähten gewickelt werden, also als sogenannte bifilare Wicklung.

Das Lüfterrad 27 enthält im wesentlichen radial verlaufende Schaufeln 38, die zwischen einem ersten Führungsglied 39 und einem zweiten Führungsglied 40 angeordnet sind. Das erste Führungsglied 39 hat eine zentrale Lufteintrittsöffnung 41 und ist im wesentlichen eben ausgebildet. Das erste und das zweite Luftführungsglied 39 bzw. 40 bilden im axialen Querschnitt gesehen in diesem Ausführungsbeispiel einen sich in Richtung nach außen erweiternden Luftaustrittsquerschnitt.

Im Bereich der Lufteintrittsöffnung 41 befindet sich ein Abschnitt 42 des Lüfterrades, in welchem die Welle 28 befestigt ist. Im zweiten Luftführungsglied 40 ist eine ferromagnetische Rückschlussscheibe 44 befestigt, auf welcher der Rotormagnet 19 für den motorischen Antrieb des Lüfterrades 27 angeordnet ist. Alternativ kann ein polorientierter Magnet ohne Rückschlussscheibe verwendet werden. Wie bereits beschrieben, befinden sich die elektronischen Bauelemente E (Transistoren, Widerstände etc.) für den Motor 12 auf der Leiterplatte 11 und sind über die Stifte 3A, 3B, 3C, 3D mit den Wicklungen 25, 26 des Motors 12 verbunden. Die Bauelemente E werden also bei der Bestückung der Leiterplatte 11 montiert. Ebenso wird der Lüfter 1 als Bauteil auf der Leiterplatte 11 montiert.

Häufig werden die Bauelemente E vom Kunden auf seiner Leiterplatte 11 montiert, und dieser kauft sich einen "nackten" Lüfter 1 und montiert diesen auf der Leiterplatte 11, so dass erst durch diese Montage ein lauffähiger elektronisch kommutierter Motor entsteht. Diese Art der "Motorherstellung" verbietet im allgemeinen die Verwendung von Rotorstellungssensoren, z.B. eines Hallgenerators, wie sie sonst häufig bei elektronisch kommutierten Motoren verwendet werden.

In **Fig. 3** ist die Antriebsspule 25 in einer H-Brücke 52 angeordnet. Der Rotor 19 ist symbolisch angedeutet. Er induziert bei seiner Rotation eine Spannung in der Sensorwicklung 26, und dies ist durch eine strichpunktierte Linie 45 symbolisch angedeutet. Wenn der Motor 12 läuft, wird seine Kommutierung durch die Spannung gesteuert, welche in der Sensorwicklung 26 induziert wird. - Die Brücke 52 hat unten zwei npn-Transistoren 54, 56, und oben zwei Widerstände 58, 60, die an einem Knotenpunkt 62 verbunden sind.

Die Emitter der Transistoren 54 und 56 sind mit einer Minusleitung 64 verbunden. Eine Plusleitung ist mit 66 bezeichnet. Der Kollektor des Transistors 54 ist mit dem Anschluss 3A der Spule 25 verbunden, der Kollektor des Transistors 56 mit dem Anschluss 3B.

Mit dem Knotenpunkt 62 ist der Kollektor eines pnp-Darlingtontransistors 68 verbunden, dessen Emitter über einen Widerstand 70 mit der Plusleitung 66 verbunden ist. Die Basis des Transistors 68 ist mit dem Kollektor eines pnp-Transistors 72 verbunden, dessen Emitter mit der Plusleitung 66 verbunden ist und dessen Basis mit dem Emitter des Transistors 68 verbunden ist. Der Kollektor des Transistors 72 ist über einen Kondensator 74 mit dem Knotenpunkt 62 verbunden, und über einen Widerstand 76 mit der Minusleitung 64.

Die beiden Transistoren 68, 72 mit ihren Widerständen 70, 76 stellen ein Konstantstromglied 77 dar, das der H-Brücke 52 einen Konstantstrom zuführt, was zu einem ruhigen Lauf des Motors 12 beiträgt und in Verbindung mit einem Radiallüfter zu besonders vorteilhaften Eigenschaften eines solchen Lüfters führt, die nachstehend erläutert werden.

Zwischen Kollektor und Basis des Brückentransistors 54 befindet sich ein Millerkondensator 78, analog beim Transistor 56 ein Millerkondensator 80. Diese Kondensatoren dienen dazu, das Ein- und Ausschalten der Transistoren 54, 56 zu verzögern, um Geräusche des Motors 12 möglichst weitgehend zu reduzieren.

Die Sensorwicklung 26 ist zwischen den Basen zweier im wesentlichen identischer npn-Transistoren 84 und 86 angeordnet, deren Emitter jeweils mit der Minusleitung 64 verbunden sind und deren Kollektoren jeweils über einen Widerstand 88 bzw. 90 mit der Plusleitung 66 verbunden sind. Ihr Anschluss 3C ist mit der Basis des Transistors 84 verbunden, ihr Anschluss 3D mit der Basis des Transistors 86.

Der Transistor 84 ist als Diode geschaltet, d.h. sein Kollektor und seine Basis sind miteinander verbunden. Die Transistoren 84 und 86 stellen eine sogenannte Stromspiegelschaltung dar, d.h. ein Strom, der durch den Transistor 84 fließt, hat einen entsprechenden Strom im Transistor 86 zur Folge, solange in der Sensorspule 26 keine Spannung induziert wird. Der Widerstand 90 ist so ausgelegt, dass die Spannung am Kollektor des Transistors 86 beim Einschalten des Motors etwa 50 % der Betriebsspannung zwischen Plusleitung 66 und Minusleitung 64 beträgt, so dass der Transistor 54 der H-Brücke 52 über den Widerstand 90 und seinen Basiswiderstand 92 einen Basisstrom erhält und nach dem Einschalten des Motors sofort leitend wird. Dies stellt den Anlauf aus der Startstellung in der richtigen Drehrichtung sicher.

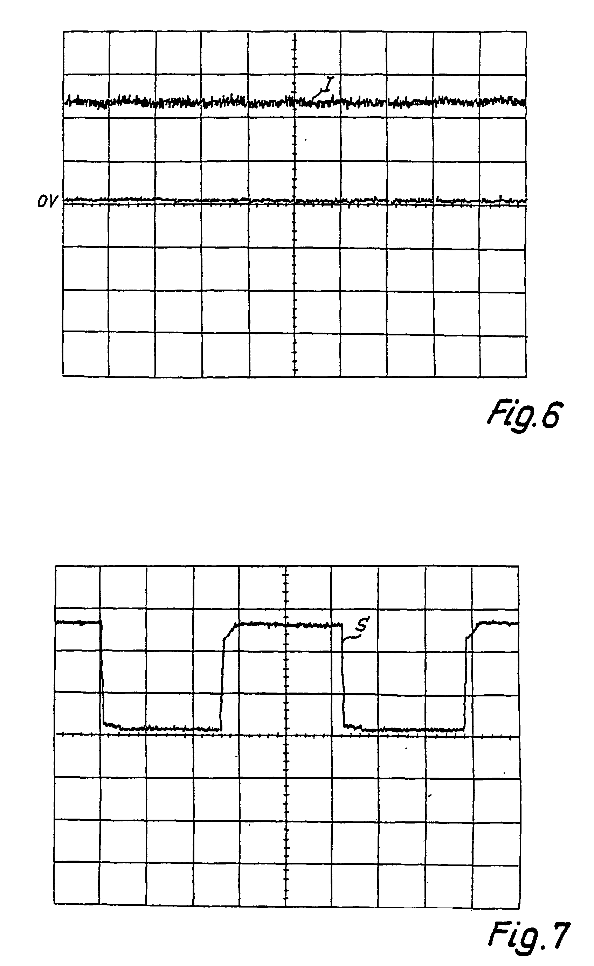

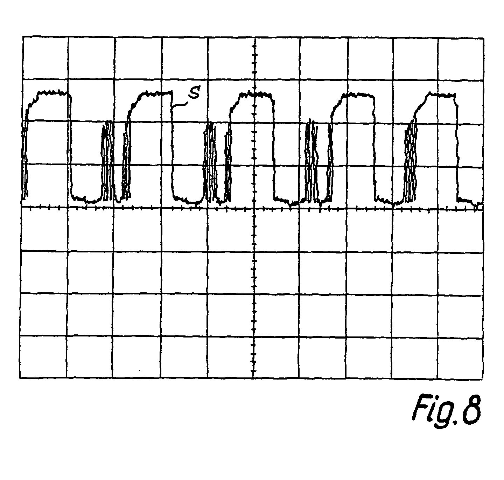

Zur Ansteuerung des anderen Brückentransistors 56 dient ein npn-Transistor 96, dessen Basis über einen Widerstand 98 mit dem Kollektor des Transistors 86 und dessen Kollektor ist mit einem Sensorausgang S verbunden ist, an dem im Betrieb ein drehzahlabhängiges Signal S entsteht, das in Fig. 7 (Signal bei rotierendem Motor) und Fig. 8 (Signal bei blockiertem Motor) dargestellt ist. Mit Hilfe des Signals S kann überwacht werden, ob sich der Motor 12 dreht, oder ob er blockiert ist.

Der Kollektor des Transistors 96 ist über einen Widerstand 100 mit der Plusleitung 66 und über einen Widerstand 102 mit der Basis des Transistors 56 verbunden. Direkt nach dem Einschalten erhält der Transistor 96 einen Basisstrom über die Widerstände 90 und 98 und wird dadurch leitend, so dass der Brückentransistor 56 gesperrt wird.

In der Stromspiegelschaltung (Transistoren 84 und 86) sollten zweckmäßig Transistoren desselben Typs verwendet werden, deren Betriebswerte nur geringe Abweichungen voneinander aufweisen. In diesem Fall ergibt sich eine sehr sichere Betriebsweise beim Einschalten des Motors, also ein sicheres Einschalten des Brückentransistors 54 und ein Sperren des Transistors 56.

Wenn sich der Motor 12 dreht und der Transistor 86 durch die Sensorspannung an der Sensorspule 26 voll leitend gesteuert wird, erhalten die Transistoren 54 und 96 keinen Basisstrom und sperren, so dass der Transistor 56 leitend wird.

Der Transistor 86 wird bei Drehung des Rotors gesteuert von der Sensorspannung, welche der Rotormagnet 19 (Fig. 1) bei seiner Drehung in der Sensorspule 26 induziert, so dass, sobald sich der Rotor 19 dreht, die Transistoren 54 und 56 durch die Spannung an der Sensorspule 26 alternierend ein- und ausgeschaltet werden.

Wenn der Transistor 54 leitend ist, fließt ein Strom über den Widerstand 70, den Transistor 68, den Widerstand 60, die Antriebsspule 25 (von 3B nach 3A) und den Transistor 54 zur Minusleitung 64. Wenn der Transistor 56 leitend ist, fließt ein Strom über den Widerstand 70, den Transistor 68, den Widerstand 58, die Antriebsspule 25 (von 3A nach 3B) und den Transistor 56 zur Minusleitung 64.

Dadurch wird die Antriebsspule 25 in abwechselnder Richtung von einem Strom durchflossen. Da solche Motoren gewöhnlich eine geringe Leistung haben, z.B. 0,4 bis 0,7 W, kann der Strom, der hierbei durch den anderen der beiden Widerstände 58, 60 fließt, in Kauf genommen werden, d.h. dieser reduziert zwar den Wirkungsgrad, aber wegen der geringen Leistung des Motors 12 kann das toleriert werden.

Parallel zum Widerstand 60 und dem Konstantstromglied 77 ist ein pnp-Transistor 106 geschaltet. Sein Kollektor ist mit dem Anschluss 3B der Antriebsspule 25 verbunden, sein Emitter mit der Plusleitung 66. Wenn dieser Transistor leitend ist, fließt also direkt ein Strom von der Plusleitung 66 über den Transistor 106, die Antriebsspule 25, und den - dann leitenden - Transistor 54 zur Minusleitung 64, um beim Einschalten des Motors 12 einen hohen Startstromimpuls zu erhalten, der den Rotor 19 machtvoll in Rotation versetzt.

Zum Einschalten des Transistors 106 dient ein RC-Zeitglied mit einem Kondensator 108 und einem Widerstand 110. Der Kondensator 108 ist an die Plusleitung 66 angeschlossen und über einen Knotenpunkt 112 mit dem Widerstand 110 verbunden, der seinerseits an die Minusleitung 64 angeschlossen ist. An den Knotenpunkt 112 ist über einen Widerstand 114 die Basis eines npn-Transistors 116 angeschlossen, dessen Emitter mit der Minusleitung 64 und dessen Kollektor über einen Widerstand 118 mit der Basis des Transistors 106 verbunden ist.

Ebenso ist an den Knotenpunkt 112 über einen Widerstand 120 die Basis eines npn-Transistors 122 angeschlossen, dessen Emitter mit-der Minusleitung 64 und dessen Kollektor direkt mit der Basis des Transistors 56 verbunden ist.

Beim Einschalten des Motors ist der Kondensator 108 entladen, so dass der Knotenpunkt 112 etwa das Potential der Plusleitung 66 hat. Dadurch sind die Transistoren 116 und 122 leitend. Der Transistor 122 sperrt den Transistor 56. Der Transistor 116 bewirkt, dass zum Transistor 106 ein Basisstrom fließt und diesen Transistor leitend macht, wodurch beim Einschalten des Motors 12, wie bereits beschrieben, ein hoher Strom durch die Antriebsspule 25 (von 3B nach 3A) fließt.

Über den Widerstand 110 wird der Kondensator 108 innerhalb kurzer Zeit aufgeladen, z.B. innerhalb 0,1 Sekunden, und danach werden die Transistoren 106, 116 und 122 gesperrt, solange der Motor 12 eingeschaltet ist.

Anschließend an das Speisen dieser Transistoren werden, gesteuert durch die Sensorspule 26, die beiden Endstufentransistoren 54 und 56 alternierend eingeschaltet, wie bereits beschrieben. Dabei ergibt sich der Spannungsverlauf gemäß **Fig. 4.** Dabei bedeutet u₅₄ die Spannung zwischen dem Kollektor des Transistors 54 und der Minusleitung 64, und u₅₆ bedeutet die Spannung zwischen dem Kollektor des Transistors 56 und der Minusleitung 64.

Die Steilheit der Flanke 130 von u₅₄ wird bestimmt durch den Kondensator 78 und den Widerstand 92. Die Steilheit der Flanke 132 der Spannung u₅₆ wird bestimmt durch C 80 und R 102. Die Flankensteilheit sollte nicht zu hoch sein, um die Geräusche des Motors 12 möglichst niedrig zu halten.

**Fig. 5** zeigt die Spannung u₁ an der Antriebsspule 25. Diese Spannung verläuft symmetrisch, was zu einem ruhigen Motorlauf wesentlich beiträgt.

**Fig. 6** zeigt den Gesamtstrom I (vgl. Fig. 3) durch den Motor 12. Dieser Strom beträgt z.B. 40 mA (innerhalb eines Betriebsspannungsbereichs von 9...16 V), und man erkennt, dass dieser Strom sehr konstant ist, was durch das Konstantstromglied 77 erreicht wird. Man kann das auch so ausdrücken, dass im Anschluss an seinen Start der ECM 12 ständig mit Strombegrenzung arbeitet, d.h. der ECM möchte eigentlich einen höheren Strom erhalten, aber dieser wird durch das Konstantstromglied auf einem weitgehend konstanten Wert gehalten, z.B. auf 40 mA.

Dies ist besonders vorteilhaft in Verbindung mit einem Radiallüfter, weil sich dadurch ein Lüfter mit herausragenden Eigenschaften ergibt. Wenn z.B. ein Luftfilter im Luftweg dieses Lüfters teilweise verstopft ist, erhöht ein solcher Radiallüfter, dessen ECM 12 mit Konstantstrom betrieben wird, automatisch seine Drehzahl, so dass selbst dann noch Luft durch ein solches Filter gefördert wird, wenn das bei einem gleichwertigen Axiallüfter nicht mehr der Fall wäre.

Bei nicht verstopftem Filter erhält man außerdem eine weitgehend konstante Drehzahl im gesamten Spannungsbereich zwischen 9 und 16 V, z.B. eine Drehzahl von etwa 2.700 U/min, und diese Drehzahl wird von Schwankungen der Betriebsspannung praktisch nicht beeinflusst.

**Fig. 7** zeigt die Spannung S beim Betrieb des Motors 12. Dies ist eine Rechteckspannung, deren Frequenz das Doppelte der Drehzahl beträgt, z.B. bei 60 U/s eine Frequenz von 120 Hz.

**Fig. 8** zeigt die Spannung S bei blockiertem Rotor 19. In diesem Fall hat S entweder die Frequenz 0, oder - wie dargestellt - eine hohe Frequenz infolge innerer Oszillationen, so dass über eine angeschlossene Alarmschaltung (nicht dargestellt) ein Alarmsignal erzeugt werden kann.

Ändern des Widerstands 70 ermöglicht Einstellung des Konstantstroms durch das Konstantstromglied 77, und damit der Drehzahl des Motors 12.

Nachfolgend werden für einen Motor 12 mit einer Betriebsspannung zwischen 9 und 16 V und einem Betriebsstrom von etwa 40 mA bei 2700 U/min typische Werte der Bauelemente angegeben:

| | |
|---|---|
| Widerstände 90, 98, 100, 118 | 10 kΩ |
| Widerstände 92, 102 | 0,43 kΩ |
| Widerstände 58, 60 | 0,36 kΩ, 250 mW |
| Widerstand 88 | 33 kΩ |
| Widerstand 70 | 16 Ω |
| Widerstand 76 | 4,7 kΩ |
| Widerstände 110, 114, 120 | 1 MΩ |
| Kondensatoren 78, 80 | 330 nF |
| Kondensator 108 | 100 nF |
| Kondensator 74 | 10 nF |
| Transistoren 54, 56, 84, 86, 96, 116, 122 | BC847C |
| Transistoren 72, 106 | BC857B |
| Transistor 68 | BST60 |

Naturgemäß sind im Rahmen der vorliegenden Erfindung vielfache Abwandlungen und Modifikationen im Rahmen der Ansprüche möglich.

## Patentansprüche

1. Elektronisch kommutierter Gleichstrommotor, welcher zum Anschluss an eine Gleichspannungsversorgung ausgebildet ist, die eine Anschlussleitung (66) mit einer ersten Polarität und eine Anschlussleitung (64) mit einer zweiten Polarität aufweist, und welcher aufweist:
Einen permanentmagnetischen Rotor (19);
einen Stator (2), welcher mindestens eine Antriebswicklung (25) aufweist, die zwei Anschlüsse (3A, 3B) hat;
eine H-Brückenschaltung (52), in deren Diagonalen die Antriebswicklung (25) angeordnet ist und bei der zwei Brückenelemente als Transistoren (54, 56) und die beiden anderen Brückenelemente als Widerstände (58, 60) ausgebildet sind, wobei der eine Transistor (54) zwischen dem einen Anschluss (3A) der Antriebswicklung (25) und der einen Anschlussleitung (64) und der andere Transistor (56) zwischen dem anderen Anschluss (3B) der Antriebswicklung (25) und derselben Anschlussleitung (64) angeordnet ist; und eine Kommutierungsschaltung zum alternierenden Aus- und Einschalten dieser beiden Transistoren (54, 56).

2. Motor nach Anspruch 1, welcher ein Konstantstromglied (77) aufweist, das mit der H-Brückenschaltung (52) in Reihe geschaltet ist.

3. Motor nach Anspruch 1 oder 2, bei welchem am Stator (2) mindestens ein ferromagnetisches Teil (34) vorgesehen ist, das den Rotor (19) im stromlosen Zustand des Motors in eine vorgegebene Startstellung, oder eine aus einer Mehrzahl von vorgegebenen Startstellungen, zieht.

4. Motor nach Anspruch 3, bei welchem das mindestens eine ferromagnetische Teil als Dauermagnet (34) ausgebildet ist.

5. Motor nach einem der Ansprüche 1 bis 4, bei welchem die Kommutierungsschaltung so ausgebildet ist, dass nach dem Einschalten ein vorgegebener Transistor (54) der H-Brückenschaltung (52) eingeschaltet und der andere Transistor (56) gesperrt wird.

6. Motor nach einem der vorhergehenden Ansprüche,
welcher eine an seinem Stator (2) angeordnete Sensorwicklung (26) aufweist, in welcher der permanentmagnetische Rotor (19) bei seiner Drehung eine Sensorspannung induziert,
und bei welchem die Kommutierungsschaltung eine Stromspiegelschaltung (84, 86) aufweist, mit welcher die Sensorwicklung (26) in der Weise elektrisch verbunden ist, dass die Stromspiegelschaltung (84, 86) beim Fehlen einer Sensorspannung an der Sensorwicklung (26) einen vorgegebenen Schaltzustand der H-Brückenschaltung (52) bewirkt.

7. Motor nach Anspruch 6, bei welchem die Stromspiegelschaltung zwei Transistoren (84, 86) aufweist, zwischen deren Basen die Sensorwicklung (26) angeordnet ist, wobei einer der Transistoren (84) als Diode geschaltet ist und der andere Transistor (86) zum Steuern der H-Brückenschaltung (52) dient.

8. Motor nach Anspruch 7, bei welchem der andere Transistor (86) der Stromspiegelschaltung mit einem Kollektorwiderstand (90) in Reihe geschaltet ist,
und die Stromspiegelschaltung so ausgelegt ist, dass bei stillstehendem Motor das Potenzial zwischen Transistor (86) und Kollektorwiderstand (90) in der Größenordnung der halben Betriebsspannung liegt.

9. Motor nach einem der vorhergehenden Ansprüche, bei welchem ein Überbrückungs-Halbleiterschalter (106) vorgesehen ist, welcher beim Einschalten des Motors (12) kurzzeitig leitend gesteuert wird und dabei ein als Widerstand ausgebildetes Element (60) der H-Brückenschaltung (52) überbrückt, um den Anlaufstrom des Motors zu erhöhen.

10. Motor nach Anspruch 2, bei welchem ein Überbrückungs-Halbleiterschalter (106) vorgesehen ist, welcher beim Einschalten des Motors (12) kurzzeitig leitend gesteuert wird und dabei ein als Widerstand ausgebildetes Element (60) der H-Brückenschaltung (52) und das Konstantstromglied (77) überbrückt, um beim Anlauf des Motors einen höheren Anlaufstrom zu ermöglichen.

11. Motor nach Anspruch 9 oder 10, bei welchem dem Überbrückungs-Halbleiterschalter (106) ein Zeitglied (108, 110) zugeordnet ist, welches diesen Halbleiterschalter (106) nur während einer vorgegebenen Zeitspanne nach dem Einschalten des Motors (12) leitend steuert.

12. Motor nach Anspruch 11, bei welchem während der vorgegebenen Zeitspanne dasjenige als Transistor ausgebildete Brückenelement (56) der H-Brückenschaltung gesperrt wird, welches mit dem Überbrückungs-Halbleiterschalter (106) in Reihe geschaltet ist.

13. Motor nach Anspruch 12, welcher zum Direktantrieb eines Lüfterrads (27) ausgebildet ist.

14. Motor nach Anspruch 13, bei welchem das Lüfterrad (27) einen Dauermagneten (19) für den Rotor des Motors trägt.

15. Motor nach einem der Ansprüche 1 bis 14, welcher aufweist:
Eine Strombegrenzungsanordnung (77), welche im Betrieb des Motors ständig aktiv ist und dabei den durch den Motor (12) fließenden Antriebsstrom auf einem vorgegebenen Wert (Fig. 6: I) hält;
und eine mit dem permanentmagnetischen Rotor (19) direkt mechanisch gekoppelte Radiallüfteranordnung (27).

16. Motor nach Anspruch 15, bei welchem eine Deaktivierungsvorrichtung (106) für die Strombegrenzungsanordnung (77) vorgesehen ist, um letztere während einer vorgegebenen Zeitspanne nach dem Einschalten des Motors zu deaktivieren.

17. Motor nach Anspruch 16, bei welchem ein Zeitglied (108, 110) zum Steuern der vorgegebenen Zeitspanne vorgesehen ist.

18. Motor nach einem der Ansprüche 15 bis 17, dessen Rotor als Bestandteil des Lüfterrades (27) der Radiallüfteranordnung ausgebildet ist.

19. Verwendung eines Motors nach einem der vorhergehenden Ansprüche zum Antrieb eines ein Lüfterrad aufweisenden Radiallüfters, wobei die Verwendung folgende Schritte aufweist:
a) Das Lüfterrad des Radiallüfters wird mit dem Rotor des elektronisch kommutierten Gleichstrommotors direkt gekuppelt;
b) der elektronisch kommutierte Gleichstrommotor wird im Betrieb mit einem konstantstrom betrieben, welcher an die gewünschte Drehzahl des Lüferrades angepasst ist.

## Claims

1. Electronically commutated direct-current motor which is designed for connection to a direct-current voltage supply comprising a connecting lead (66) with a first polarity and a connecting lead (64) with a second polarity, and which comprises:
a permanent magnet rotor (19);
a stator (2) which comprises at least one driving winding (25) which has two connections (3A, 3B);
an H-bridge circuit (52) in whose diagonals the driving winding (25) is arranged and in which two bridge elements are embodied as transistors (54, 56) and the other two bridge elements are embodied as resistors (58, 60), with one transistor (54) arranged between one connection (3A) of the driving winding (25) and one connecting lead (64) and the other transistor (56) arranged between the other connection (3B) of the driving winding (25) and the same connecting lead (64);
and a commutation circuit for turning these two transistors (54, 56) on and off in alternation.

2. Motor according to claim 1, which comprises a constant current element (77) which is connected in series with the H-bridge circuit (52).

3. Motor according to claim 1 or 2, in which the stator (2) is provided with at least one ferromagnetic part (34) which in the currentless state of the motor draws the rotor (19) into a predetermined starting position or one of a plurality of predetermined starting positions.

4. Motor according to claim 3, in which the at least one ferromagnetic part is embodied as a permanent magnet (34).

5. Motor according to one of claims 1 to 4, in which the commutation circuit is embodied so that after switching on, one predetermined transistor (54) of the H-bridge circuit (52) is turned on and the other transistor (56) is turned off.

6. Motor according to one of the preceding claims, which comprises a sensor winding (26) which is arranged on its stator (2) and in which the permanent magnet rotor (19) induces a sensor voltage as it turns, and in which the commutation circuit comprises a current reflecting circuit (84, 86) with which the sensor winding (26) is connected electrically such that the current reflecting circuit (84, 86) produces a predetermined switching state of the H-bridge circuit (52) in the absence of a sensor voltage at the sensor winding (26).

7. Motor according to claim 6, in which the current reflecting circuit comprises two transistors (84, 86) between whose bases is arranged the sensor winding (26), with one of the transistors (84) connected as a diode and the other transistor (86) serving for control of the H-bridge circuit (52).

8. Motor according to claim 7, in which the other transistor (86) of the current reflecting circuit is connected in series with a collector resistor (90), and the current reflecting circuit is designed so that when the motor is at a standstill the potential between the transistor (86) and the collector resistor (90) is in the order of magnitude of half the operating voltage.

9. Motor according to one of the preceding claims, in which a bridging semiconductor switch (106) is provided which is briefly turned on when the motor (12) is switched on, and in the process bridges an element (60) of the H-bridge circuit (52) in the form of a resistor in order to increase the starting current of the motor.

10. Motor according to claim 2, in which a bridging semiconductor switch (106) is provided which is briefly turned on when the motor (12) is switched on, and in the process bridges an element (60) of the H-bridge circuit (52) in the form of a resistor and the constant current element (77) in order to allow a higher starting current when starting the motor.

11. Motor according to claim 9 or 10, in which the bridging semiconductor switch (106) has associated therewith a time element (108, 110) which only turns this semiconductor switch (106) on during a predetermined period of time after the motor (12) is switched on.

12. Motor according to claim 11, in which the bridge element (56) of the H-bridge circuit in the form of a transistor which is connected in series with the bridging semiconductor switch (106) is turned off during the predetermined period of time.

13. Motor according to claim 12, which is designed for direct drive of a fan wheel (27).

14. Motor according to claim 13, in which the fan wheel (27) carries a permanent magnet (19) for the rotor of the motor.

15. Motor according to one of claims 1 to 14, which comprises:
a current limiting arrangement (77) which is constantly active while the motor is in operation and in the process keeps the driving current flowing through the motor (12) at a predetermined value (fig. 6: I);
and a radial fan arrangement (27) mechanically coupled directly to the permanent magnet rotor (19).

16. Motor according to claim 15, in which a deactivating device (106) is provided for the current limiting arrangement (77) in order to deactivate the latter during a predetermined period of time after the motor is switched on.

17. Motor according to claim 16, in which a time element (108, 110) is provided for control of the predetermined period of time.

18. Motor according to one of claims 15 to 17, whose rotor is embodied as a component part of the fan wheel (27) of the radial fan arrangement.

19. Use of a motor according to one of the preceding claims for driving a radial fan comprising a fan wheel, the use comprising the following steps:
a) the fan wheel of the radial fan is coupled directly to the rotor of the electronically commutated direct-current motor;
b) when in operation the electronically commutated direct-current motor is operated with a constant current which is adjusted to the desired rotational speed of the fan wheel.

## Revendications

1. Moteur à courant continu à commutation électronique, lequel est conçu pour être raccordé à une alimentation à tension continue, qui présente une ligne de raccordement (66) d'une première polarité et une ligne de raccordement (64) d'une deuxième polarité, et qui présente :
un rotor à aimant permanent (19) ;
un stator (2) qui présente au moins un enroulement d'entraînement (25) qui possède deux connexions (3A, 3B) ;
un circuit en pont en H (52) dans les diagonales duquel est disposé l'enroulement d'entraînement (25) et dans lequel deux éléments du pont sont constitués de transistors (54, 56) et les deux autres éléments du pont sont constitués de résistances (58, 60), l'un des transistors (54) étant disposé entre l'une des connexions (3A) de l'enroulement d'entraînement (25) et la ligne de raccordement (64) et l'autre transistor (56) entre la connexion (3B) de l'enroulement d'entraînement (25) et la même ligne de raccordement (64);
et un circuit de commutation pour l'activation et la désactivation alternantes des deux transistors (54, 56).

2. Moteur selon la revendication 1, lequel présente un élément à courant constant (77) qui est couplé en série avec le circuit en pont en H (52).

3. Moteur selon la revendication 1 ou 2, dans lequel il est prévu sur le stator (2) au moins une partie ferromagnétique (34) qui, en l'absence de courant dans le moteur, attire le rotor (19) dans une position de démarrage définie ou dans une parmi plusieurs positions de démarrage définies.

4. Moteur selon la revendication 2, dans lequel la ou les partie(s) ferromagnétique(s) est/sont constituée(s) d'un aimant permanent (34).

5. Moteur selon l'une des revendications 1 à 4, dans lequel le circuit de commutation est conçu de telle manière qu'à la mise sous tension un transistor défini (54) du circuit en pont en H (52) est activé et l'autre transistor (56) est bloqué.

6. Moteur selon l'une des revendications précédentes,
lequel présente un enroulement de détection (26) disposé sur son stator (2), dans lequel le rotor à aimant permanent (19) induit une tension de détection lors de sa rotation,
et dans lequel le circuit de commutation présente un circuit à miroir de courant (84, 86) avec lequel l'enroulement de détection (26) est relié électriquement de telle manière qu'en l'absence d'une tension de détection sur l'enroulement de détection (26), le circuit à miroir de courant (84, 86) provoque un état de commutation défini du circuit en pont en H (52).

7. Moteur selon la revendication 6, dans lequel le circuit à miroir de courant présente deux transistors (84, 86) entre les bases desquels est disposé l'enroulement de détection (26), l'un des transistors (84) étant monté en diode et l'autre transistor (86) servant à la commande du circuit en pont en H (52).

8. Moteur selon la revendication 7, dans lequel l'autre transistor (86) du circuit à miroir de courant est couplé en série avec une résistance de collecteur (90),
et-le circuit à miroir de courant est conçu de telle manière que lorsque le moteur est à l'arrêt le potentiel entre le transistor (86) et la résistance de collecteur (90) est de l'ordre de la moitié de la tension de service.

9. Moteur selon l'une des revendications précédentes, dans lequel il est prévu un commutateur à semi-conducteur de shuntage (106) qui, à la mise sous tension du moteur (12), est momentanément rendu conducteur et shunte ce faisant un élément (60) sous forme de résistance du circuit en pont en H (52) pour augmenter le courant de démarrage du moteur.

10. Moteur selon la revendication 2, dans lequel il est prévu un commutateur à semi-conducteur de shuntage (106) qui, à la mise sous tension du moteur (12), est momentanément rendu conducteur et shunte ce faisant un élément (60) sous forme de résistance du circuit en pont en H (52) et l'élément à courant constant (77) pour permettre un courant de démarrage plus élevé lors du démarrage du moteur.

11. Moteur selon la revendication 9 ou 10, dans lequel le commutateur à semi-conducteur de shuntage (106) est associé à un relais de temporisation (108, 110) qui ne rend ce commutateur à semi-conducteur (106) conducteur que pendant un laps de temps défini après la mise sous tension du moteur (12).

12. Moteur selon la revendication 11, dans lequel, pendant le laps de temps défini, l'élément de pont constitué d'un transistor (56) du circuit en pont en H qui est couplé en série avec le commutateur à semi-conducteur de shuntage (106) est bloqué.

13. Moteur selon la revendication 12, lequel est conçu pour l'entraînement direct d'une roue de ventilateur (27).

14. Moteur selon la revendication 13, dans lequel la roue de ventilateur (27) porte un aimant permanent (19) pour le rotor du moteur.

15. Moteur selon l'une des revendications 1 à 14, lequel présente :
un dispositif de limitation de courant (77) qui est constamment actif pendant le fonctionnement du moteur et maintient le courant d'entraînement circulant dans le moteur (12) à une valeur définie (fig. 6 : I);
et un dispositif de ventilateur radial (27) couplé directement mécaniquement avec le rotor à aimant permanent (19).

16. Moteur selon la revendication 15, dans lequel il est prévu un dispositif de désactivation (106) du dispositif de limitation de courant (77) pour désactiver ce dernier pendant un laps de temps défini après la mise sous tension du moteur.

17. Moteur selon la revendication 16, dans lequel il est prévu un relais de temporisation (108, 110) pour la commande du laps de temps défini.

18. Moteur selon l'une des revendications 15 à 17, dont le rotor fait partie intégrante de la roue de ventilateur (27) du dispositif de ventilateur radial.

19. Utilisation d'un moteur selon l'une des revendications précédentes pour l'entraînement d'un ventilateur radial présentant une roue de ventilateur, l'utilisation présentant les étapes suivantes :
a) la roue de ventilateur du ventilateur radial est directement couplée avec le rotor du moteur à courant continu à commutation électronique ;
b) le moteur à courant continu à commutation électronique est alimenté en fonctionnement par un courant continu qui est adapté à la vitesse de rotation souhaitée de la roue de ventilateur.
